Europäisches Patentamt

European Patent Office

Office européen des brevets

(11) Numéro de publication: **0 074 902**

**A1**

(12) ## DEMANDE DE BREVET EUROPEEN

(21) Numéro de dépôt: **82401653.9**

(22) Date de dépôt: **10.09.82**

(51) Int. Cl.³: **G 05 B 19/42**

(30) Priorité: **15.09.81 FR 8117388**

(43) Date de publication de la demande:
**23.03.83 Bulletin 83/12**

(84) Etats contractants désignés:
**AT BE CH DE GB IT LI LU NL SE**

(71) Demandeur: **Société PHAREMME**
**Les Nouhauts**
**F-87370 Saint-Sulpice-Lauriere Haute-Vienne(FR)**

(71) Demandeur: **INSTITUT UNIVERSITAIRE DE TECHNOLOGIE DE LIMOGES**
**Allée André Maurois**
**F-87065 Limoges Cédex Haute-Vienne(FR)**

(72) Inventeur: **Roux, Serge**
**9, Avenue Vincent Auriol**
**F-87100 Limoges(FR)**

(72) Inventeur: **Berland, Richard**
**Rue des Pendants**
**F-87100 Limoges(FR)**

(74) Mandataire: **Chevallier, Robert**
**Cabinet BOETTCHER 23, rue La Boétie**
**F-75008 Paris(FR)**

(54) **Procédé et circuit pour la réalisation d'un support impressionné et pour la commande d'un automate.**

(57) Chaque moteur (M1) est commandé, pendant une phase d'apprentissage, à l'aide d'un levier (2) par l'intermédiaire d'une horloge (3) et d'un générateur de fréquences (5) à des valeurs distinctes de celles-ci à travers un totalisateur d'impulsions (6), une unité (4) enregistrant sur un support uniquement le repère de chaque fréquence et la durée pendant laquelle aucun changement de fréquences ne s'est produit, par blocs successifs de signaux comprenant chacun le repère de la nouvelle fréquence et la durée d'absence de changements.

*Fig.1*

EP 0 074 902 A1

Procédé et circuit pour la réalisation d'un support impressionné et pour la commande d'un automate.

L'invention a pour objet un procédé et un circuit pour la réalisation d'un support impressionné par des signaux représentant des consignes de commande d'un automate. L'invention couvre aussi un circuit pour le fonctionnement d'un automate à partir d'un support impressionné selon le procédé de l'invention.

Le mot automate est à prendre ici dans son sens le plus général; il désigne tout appareil ou dispositif ou robot comprenant un organe extrême tel qu'une pince qui doit occuper dans l'espace des positions successives prédéterminées sous l'effet d'au moins deux moteurs affectés chacun à un mouvement de nature déterminée de cet organe extrême.

Quand l'automate fonctionne seul, il agit conformément à des signaux qui ont servi préalablement à impressionner un support qui les restitue successivement. Ces signaux commandent le fonctionnement des moteurs pour que l'organe extrême décrive aussi exactement que possible une trajectoire prédéterminée. Cette dernière est la résultante du jeu simultané des moteurs. Ceux-ci peuvent être d'un type quelconque (moteurs électriques, vérins à fluide sous pression, etc...).

Dans un robot qui reproduit un bras humain à partir d'une épaule, avec un avant-bras, un poignet, une pince orientable, pivotante et préhensile servant de main, on peut trouver jusqu'à sept mouvements distincts de rotation et de pivotement susceptibles d'être combinés pour l'exécution dans l'espace d'une opération entre un point et un autre.

Il est évident que le support impressionné qui porte les signaux de commande de ces mouvements est un élément essentiel pour le bon fonctionnement de l'automate. Il est évident que l'on a intérêt à réaliser ce support impressionné de façon qu'il contienne toutes les informations nécessaires et qu'il occupe le volume le plus faible, ou la longueur la plus réduite.

2          0074902

Un procédé utilisé jusqu'à présent consiste à impressionner le support par des signaux représentant les coordonnées des deux points de départ et d'arrivée d'une série de déplacements et par des signaux représentant les coordonnées de très nombreux points intermédiaires espacés. Une variante apportée à ce procédé consiste à adjoindre un capteur à chacune des articulations où se produisent les mouvements de rotation ou de pivotement; des signaux sont prélevés à cadence élevée au moyen de ces capteurs pour impressionner le support et enregistrer les coordonnées des positions relatives successives de ces articulations.

Un autre procédé connu consiste à utiliser des capteurs du type à inertie pour obtenir des signaux représentatifs des accélérations et des vitesses selon trois axes de référence des mouvements de l'organe extrême; on impressionne le support à l'aide de ces signaux ou à l'aide de signaux qui en dérivent après un traitement mathématique.

Ces procédés connus ont en commun la caractéristique de fournir un support impressionné utilisable mais dont la longueur est importante.

L'invention a pour but principal d'apporter un procédé de réalisation d'un support impressionné pour la commande d'un automate dont la longueur, ou l'encombrement, est réduit à la valeur nécessaire la plus stricte.

L'invention concerne aussi les circuits qui servent à la mise en oeuvre de ce procédé et au fonctionnement automatique de l'automate à partir des signaux provenant du support impressionné.

Il est devenu courant de réaliser les supports impressionnés par la méthode de l'apprentissage selon laquelle un opérateur humain commande directement ou exécute lui-même une première fois l'ensemble des mouvements que l'automate devra reproduire. Dans l'état actuel de la technique, cette méthode est la plus rapide et la plus sûre. Elle a l'avantage que l'apprentissage peut se faire avec précision à une vitesse lente ou ralentie et que les signaux peuvent être restitués à une vitesse plus grande à une cadence que l'automate peut soutenir sans fatigue.

Un but secondaire de l'invention est de parvenir à un procédé tel que précisé plus haut qui permette de confectionner le support impressionné conformément à la méthode de l'apprentissage ou sans le recours à celle-ci si on le désire.

Selon le procédé de l'invention, en vue de la commande automatique, à partir d'un support impressionné, de l'un quelconque ou de plusieurs moteurs faisant partie des moteurs d'un automate, pour confectionner ce support impressionné, on affecte respectivement à chaque moteur un générateur d'impulsions de commande de ce moteur, on produit au moyen de chaque générateur des impulsions à une fréquence affectée d'un repère et choisie entre plusieurs valeurs prédéterminées repérées respectivement, le nombre de ces valeurs repérées de la fréquence étant en correspondance avec des valeurs distinctes prédéterminées de la vitesse de fonctionnement du moteur correspondant. Au début d'une suite de mouvements à enregistrer pour la marche ultérieure de l'automate, on déclenche une horloge et on détermine à partir de cette horloge la durée pendant laquelle les générateurs d'impulsions ont fonctionné sans changement à chacune des fréquences repérées qu'ils fournissent. On impressionne le support par blocs successifs de signaux; le premier bloc comprend le repère de chaque fréquence des impulsions émises par chaque générateur à destination de chaque moteur de l'automate et la durée d'émission de ces fréquences tant qu'un changement ne se produit pas. A chaque changement de la valeur d'une fréquence émise à destination d'un moteur quelconque, on enregistre un nouveau bloc comprenant exclusivement le repère de cette nouvelle valeur et la durée de son émission. Tant qu'on ne commande pas de changement d'une fréquence en relation avec un moteur, on n'enregistre rien sur le support. De cette façon, le support impressionné obtenu porte une suite de blocs de signaux qui comprennent chacun après chaque changement le repère de la nouvelle valeur de la fréquence émise à destination d'un moteur quand cette fréquence a subi un changement et la durée pendant laquelle la situation nouvelle ainsi créée subsiste sans nouveau changement. Ainsi, la quantité stockée sur le  support impressionné est considérablement restreinte.

On peut choisir le nombre des valeurs prédéterminées des fréquences dans un ensemble de $2^p$ valeurs de façon à pouvoir utiliser un code à p éléments binaires,  p étant de valeur faible. Quand, à un moment quelconque, l'organe extrême de l'automate exécute un mouvement résultant de l'effet composé de n moteurs mis en marche en même temps, le mouvement instantané peut être représenté par un vecteur à n composantes. Le procédé de l'invention consiste à mémoriser pendant la phase d'instruction ou d'apprentissage de l'automate ces vecteurs successifs en leur adjoignant un paramètre de temps mesuré par l'horloge, codé à l'aide de m éléments binaires, représentant la durée pendant laquelle ces n composantes sont restées constantes. A chaque durée des n composantes restées constantes, correspond un bloc de signaux. Selon le procédé de l'invention, on passe d'un bloc à un bloc suivant quand une seule composante est modifiée de sorte qu'on impressionne le support avec seulement l'indication de la composante modifiée, le repère de la nouvelle valeur de cette composante, le temps pendant lequel cette situation subsiste jusqu'au prochain changement qui occasionnera un nouveau bloc.

Pour la restitution des signaux et la commande de l'automate à partir du support impressionné on envoie les signaux des blocs successifs aux générateurs d'impulsions pour que ceux-ci émettent des impulsions de commande des moteurs à la fréquence enregistrée pendant la durée enregistrée. De préférence, selon l'invention on envoie d'abord ces impulsions à un totalisateur et ensuite, après la sortie de ce totalisateur on les envoie au moteur concerné. Dans le cas le plus fréquent où ce dernier est de type analogique, un convertisseur numérique-analogique est interposé entre le totalisateur et le moteur. Il est avantageux comme on l'expliquera plus loin d'utiliser un totalisateur chargeable en parallèle.

De préférence, au moment de l'enregistrement des repères des fréquences, on y ajoute un élément binaire indicatif de signe + ou - qui correspond au sens de marche du moteur correspondant. A la restitution le totalisateur compte ou décompte selon le signe. Le total cumulé des impulsions qu'il contient équivaut à une consigne de position du moteur auquel il est associé.

Pour mieux faire comprendre l'invention, on expliquera plus en détail le procédé en se référant à l'exemple d'un automate supposé être capable, par simplification, de deux mouvements élémentaires ($n = 2$) pouvant être combinés. Ces mouvements s'accomplissent sous l'action de deux moteurs distincts dont les vitesses de marche sont définies par une donnée analogique (une tension d'alimentation).

On se reportera aux dessins annexés dans lesquels :

- la figure 1 est un schéma simplifié montrant un circuit de principe pour l'enregistrement et la répétition des mouvements d'un moteur, conformément à l'invention,

- la figure 2 est une représentation schématique des circuits selon l'invention utilisés pour un automate à deux moteurs.

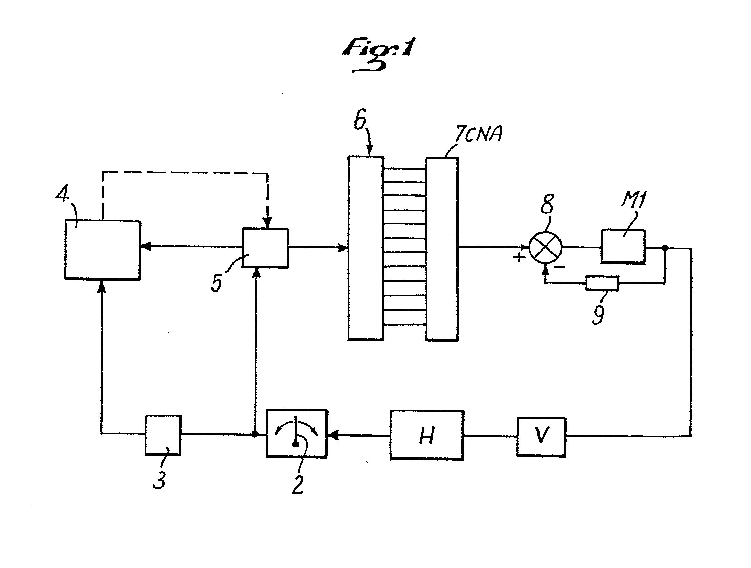

Pour la mise en oeuvre du procédé de l'invention, on se sert d'un montage représenté sur la figure 1, pendant la phase d'impression du support.

Un moteur M1 qui agit sur un élément mobile d'un automate est commandé par un opérateur humain H sous le contrôle direct de sa vue V au moyen d'un levier 2 à deux sens opposés de déplacement. Une horloge 3 est déclenchée par le levier 2 quand une série de mouvements commence. Cette horloge 3 est raccordée à une unité centrale 4 où se fait l'impression d'un support. Le levier 2 est relié aussi à un générateur 5 d'impulsions à fréquence variable qui est raccordé aussi à l'unité centrale 4. Le générateur 5 d'impulsions est raccordé en plus à un totalisateur-compteur--décompteur 6 dont les sorties sont réunies à un convertisseur numérique-analogique 7 CNA. Ce dernier est raccordé à un circuit 8 de consigne de position qui est relié au moteur M1 directement et par un détecteur de position 9. Les ordres donnés au moyen du levier 2 sont transmis au moteur M1 par l'intermédiaire du générateur 5 d'impulsions à fréquence variable à une fréquence prédéterminée en fonction de la position du levier 2. Quand il s'agit d'un moteur M1 analogique, après avoir été totalisées par le totalisateur 6, les impulsions lui sont transmises à travers le convertisseur 7 CNA. Conformément au procédé décrit plus haut, on confectionne le support en y enregistrant la durée de fonctionnement de l'horloge 3 pendant chaque période au cours de laquelle le générateur 5 délivre le même signal. Pour la répétition automatique des mouvements, l'unité centrale 4 est reliée, comme indiqué en trait interrompu, au générateur 5 pour le commander conformément aux signaux portés par le support impressionné.

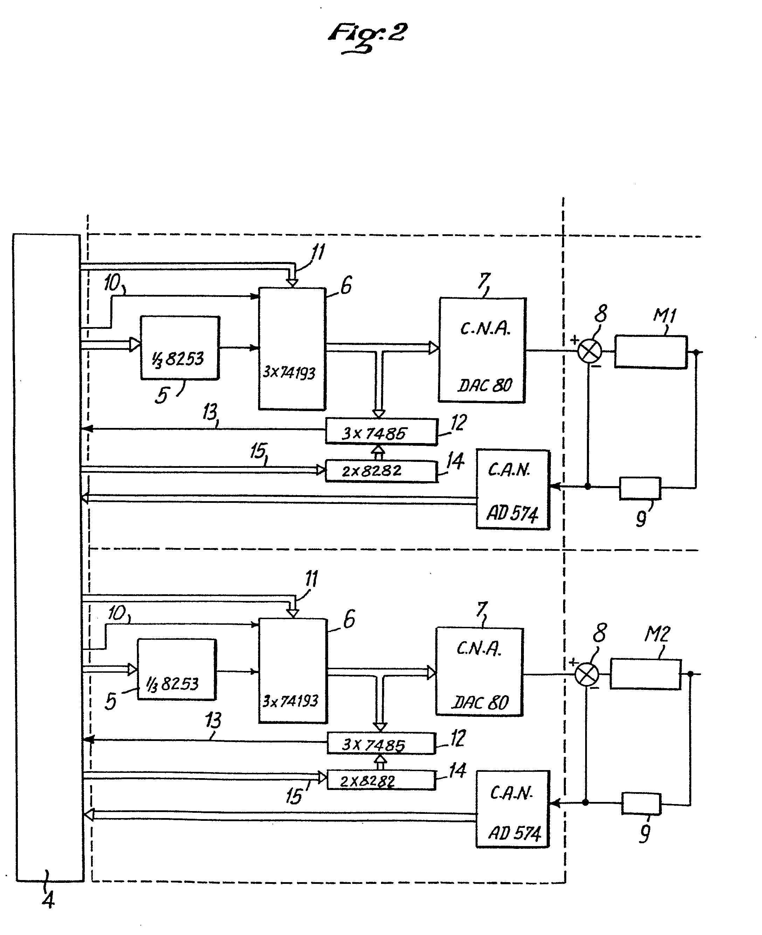

La figure 2 montre des circuits réels dans un automate à deux moteurs M1, M2.

Pendant la phase d'apprentissage et de confection du support impressionné, un opérateur commande les moteurs M1, M2 à l'aide par exemple d'un manche à balai, avec un contrôle visuel direct. Les tensions de commande de la vitesse ainsi engendrées manuellement sont converties en permanence par deux convertisseurs numériques analogiques synchronisés en deux mots de $p = 4$ éléments binaires qui autorisent $2^4 = 16$ valeurs de fréquence. Cés 16 valeurs sont divisées en deux groupes de 8 valeurs absolues égales affectées d'un élément binaire de signe. A l'une de ces valeurs correspond l'arrêt de toute émission de fréquence et, donc, un état de repos du moteur. Ce sont les repères affectés respectivement à chacune de ces valeurs distinctes des fréquences que l'on enregistre sur le support en même temps que la durée pendant laquelle aucun changement n'a eu lieu des valeurs des fréquences correspondantes à l'un et à l'autre moteur. A la restitution on disposera donc, dans l'un et dans l'autre sens des déplacements, de 7 valeurs de fréquences des impulsions qui détermineront 7 vitesses de marche de chaque moteur.

En pratique, l'unité centrale 4 comprend une carte microordinateur courante à horloge programmable disponible dans le commerce sous la référence INTEL SBC 80-24. L'horloge de cette carte joue le rôle de l'horloge 3 et sert à déterminer le temps séparant toute modification de chaque composante du vecteur vitesse de l'automate. A cette fin, les sorties du convertisseur sont surveillées à une fréquence de 10 ms, par exemple.

Les mêmes composants électroniques existent entre l'unité centrale 4 et chaque moteur M1, M2. On peut adopter, comme générateur 5 d'impulsions le générateur de fréquence programmable connu dans le commerce sous la réfé- rence INTEL 8253 ($\frac{1}{3}$). Le totalisateur est, dans cet exemple, à 12 chiffres binaires, connu sous la référence 3 x 74193 T.T.L. Il compte ou il décompte en fonction de l'élément binaire de signe mentionné plus haut. Cette information lui est fournie à partir de l'unité centrale 4 par une ligne 10. Le convertisseur 7 CNA est du type connu sous la référence DAC 80.

Pendant la répétition des mouvements par l'automate, on peut obtenir une allure accélérée en agissant sur l'horloge de base des générateurs de fréquence programmables. La valeur peut être choisie par l'opérateur dans une gamme de vitesses. L'allure de répétition peut donc être fixée et modifiée avec facilité.

Quand on emploie des totalisateurs-compteurs- -décompteurs 6 chargeables en parallèle. on dispose de la possibilité de faire un préchargement de ces totalisateurs afin de réaliser une mise en position avant l'alimentation en puissance des moteurs, par l'intermédiaire de chacun des convertisseurs numériques analogiques 7 qui leur sont associés. Le préchargement du totalisateur facilite aussi la détection du franchissement de limites interdites au mouvement. Ce préchargement initial s'effectue par l'intermédiaire d'une ligne 11 provenant de l'unité centrale 4.

Les circuits de la figure 2 comprennent encore, pour chaque moteur M1, M2, un comparateur numérique 12 (à 12 éléments binaires par exemple), relié à l'unité centrale 4 par une ligne 13, branché sur les sorties du totalisateur 6 avec le convertisseur 7 CNA. On peut utiliser le comparateur T.T.L. 3 x 7485. Ce comparateur 12 est réuni à un registre 14 à 12 éléments binaires (par exemple un registre INTEL 2 x 8282) qui est lui aussi relié à l'unité centrale 4.

Ce registre 14 peut être préchargé à partir de l'unité centrale 4 à une valeur à laquelle correspond une position prédéterminée du moteur M1 ou M2. Quand le comparateur 12 constate la même valeur entre le totalisateur 6 et le registre 14, il envoie à l'unité centrale 4 un ordre d'arrêt. De cette façon, on peut imposer à l'avance un arrêt de n'importe quel moteur à une position finale prédéterminée, par un fonctionnement pas à pas, par action directe sur chaque générateur 5. Il est donc possible de déterminer et d'imposer à l'automate une série de mouvements sans avoir effectué une phase d'apprentissage comme celle décrite plus haut.

REVENDICATIONS

1. Procédé pour la réalisation par une unité appropriée de type connu d'un support impressionné par des signaux en vue de la commande automatique ultérieure des mouvements d'un automate comprenant plusieurs moteurs, caractérisé en ce qu'on affecte à chaque moteur un générateur d'impulsions de commande de ce moteur, on produit à l'aide de ce générateur des impulsions à une fréquence affectée d'un repère et choisie entre plusieurs valeurs prédéterminées qui correspondent chacune à une vitesse prédéterminée de marche du moteur, on associe une horloge aux générateurs d'impulsions et on enregistre sur le support le repère de chacune des fréquences de commande des moteurs et la durée pendant laquelle les fréquences subsistent sans modifications.

2. Procédé selon la revendication 1 caractérisé en ce qu'on impressionne le support par blocs successifs de signaux, chaque bloc qui suit le premier bloc initial comprenant uniquement le repère de la nouvelle fréquence émise par l'un quelconque des générateurs et la durée pendant laquelle les fréquences conservent la même valeur.

3. Procédé selon la revendication 1 caractérisé en ce qu'on commande chaque moteur à partir du générateur d'impulsions qui lui est affecté par l'intermédiaire d'un totalisateur qui totalise les impulsions envoyées à ce moteur.

4. Procédé selon la revendication 3 caractérisé en ce qu'on adjoint au repère des fréquences un élément binaire indicatif de signe + ou - en correspondance avec le sens de marche du moteur et on utilise un totalisateur--compteur-décompteur dont le total cumulé des impulsions équivaut à une consigne de position du moteur.

5. Circuit pour la mise en oeuvre du procédé selon la revendication 1 caractérisé en ce qu'il comprend un levier de commande (2) associé à chaque moteur (Ml) d'un automate et relié à une unité (4) d'impression d'un support d'une part en association avec une horloge (3), d'autre part par l'intermédiaire d'un générateur d'impulsions (5) émettant ces impulsions à des valeurs prédéterminées de fréquences en nombre fini.

6. Circuit selon la revendication 5 caractérisé en ce que le générateur d'impulsions (5) est relié au moteur (M1) par l'intermédiaire d'un totalisateur (6).

7. Circuit selon la revendication 6 caractérisé en ce que le totalisateur (6) est du type à comptage-décomptage en rapport avec les sens de rotation du moteur (M1).

8. Circuit selon la revendication 7 caractérisé en ce que le totalisateur-compteur-décompteur (6) est du type chargeable en parallèle.

9. Circuit selon la revendication 6 caractérisé en ce qu'un comparateur (12) est relié à la sortie du totalisateur (6) et à un registre chargeable (14) qui est lui-même réuni à une unité générale de commande de façon à commander l'arrêt à la valeur à laquelle il a été préalablement chargé quand le totalisateur (6) atteint cette valeur.

*Fig.1*

*Fig:2*

Office européen
des brevets

**RAPPORT DE RECHERCHE EUROPEENNE**

**0074902**
Numéro de la demande

EP 82 40 1653

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | G 05 B 19/42 |
| A | US-A-3 736 580 (CHIBA et al.) *Résumé; colonne 2, ligne 41 - colonne 4, ligne 24; figures 1-3* | 1,4 | |
| | ----- | | |

**DOMAINES TECHNIQUES RECHERCHES (Int. Cl. ³)**

G 05 B 19/00
B 25 J 9/00

Le présent rapport de recherche a été établi pour toutes les revendications

| Lieu de la recherche | Date d'achèvement de la recherche | Examinateur |
|---|---|---|
| LA HAYE | 17-12-1982 | RUGGIU M.L.J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82